# EUROPEAN PATENT SPECIFICATION

(11) **EP 3 772 383 B1**
(45) Date of publication and mention of the grant of the patent: **19.07.2023**
(21) Application number: 19190276.6
(22) Date of filing: 06.08.2019
(51) Int. Cl.: B08B 9/42, B65G 17/42

(54) **BEAM FOR A WASHING MACHINE AND METHOD FOR CONNECTING A WALL OF A BEAM TO A CONNECTING ASSEMBLY OF THE BEAM**
TRÄGER FÜR EINE WASCHMASCHINE UND VERFAHREN ZUR VERBINDUNG EINER WAND EINES TRÄGERS MIT EINER VERBINDUNGSANORDNUNG DES TRÄGERS
POUTRE POUR MACHINE À LAVER ET PROCÉDÉ DE CONNEXION D'UNE PAROI D'UNE POUTRE À UN ENSEMBLE DE CONNEXION DE LA POUTRE

(43) Date of publication of application: 10.02.2021
(73) Proprietor: SIDEL S.P.A., 43126 Parma (IT)
(72) Inventor: BERZAGHI, Claudio, 37139 Verona (IT)
(74) Representative: Sidel Group

(56) References cited:
- EP-A1- 3 342 734
- DE-A1- 2 618 661
- DE-A1-102014 119 433
- US-A- 2 984 334
- US-A- 3 106 283
- US-A1- 2015 008 164

## Description

The present invention relates to a beam for a washing machine for washing containers and to a method for connecting a wall of a beam to a connecting assembly of the beam.

In general, washing machines are known with the purpose of cleaning the empty containers upstream of a filling and a labelling station, in which the containers are respectively filled with a pourable product and labelled with respective labels.

An example of washing machine is known from EP2727660 in the name of the same Applicant. Known from US2015/008164 is a beam of a washing machine as defined in the preamble of claim 1.

Known washing machines essentially comprise:
- a feeding system;
- a washing tunnel;
- a looped chain conveyor advancing the containers along a closed washing path and extending inside the washing tunnel from an inlet station to an outlet station; and
- a plurality of sequential treatment zones arranged between the inlet station and the outlet station, and through which the chain conveyor advances the containers.

In detail, the chain conveyor conveys a plurality of beams, which are fed at the inlet station by the feeding system with respective rows of containers.

Each beam normally comprises two walls parallel to a longitudinal direction of the beam and spaced from each other along a transversal direction, which is perpendicular to the longitudinal direction.

In particular, each beam comprises a plurality of pockets aligned along the longitudinal direction, which receive, convey and outlet the respective washed containers and are arranged in the space between the two walls.

Furthermore, each beam is connected to the chain conveyor by means of a connecting assembly, which is responsible for movably supporting on the chain conveyor the beam and the containers inserted in the pockets.

As a result, during the operation of the washing machine, the connecting assemblies are normally exposed to high loads, which may be critical especially to fatigue strength.

In a known solution, each beam is connected to the chain conveyor by means of two opposite connecting assemblies along the longitudinal direction.

Each connecting assembly comprises:
- a first plate and a second plate, which are arranged between the two walls along the transversal direction; and
- screws, for connecting the first and the second plate to the wheels of the chain conveyor.

In detail, the first plate is arranged in a plane defined by the longitudinal and the transversal directions.

Furthermore, the first plate is welded to the second plate and the second plate is welded to the walls of the respective beam.

However, fatigue failures have been often observed in the known connecting assemblies.

These failures tend to drastically reduce the service life of the entire machine and make it necessary to carry out frequent maintenance operations of the connecting assemblies.

Furthermore, the known connecting assemblies leave room for improvement especially due to the frequent interferences between the first plate and the chain conveyor.

In view of this, a need is felt within the sector for a beam for a washing machine, having an optimized connecting assembly between the beam and the conveyor, so as to extend the service life of the washing machine.

It is an object of the present invention to provide a beam for a washing machine, which allows to meet the abovementioned need in a simple and economic manner.

This object is achieved by the present invention, as it relates to a beam for a washing machine, as claimed in claim 1.

The invention also relates to a method for connecting a wall of a beam to a connecting assembly of the beam, as claimed in claim 12.

One preferred embodiment is hereinafter disclosed for a better understanding of the present invention, by way of a non-limitative example and with reference to the accompanying drawings, in which:
- Figure 1 is a lateral view of a washing machine with a plurality of beams according to the present invention, with parts removed for clarity;
- Figure 2 is a perspective view, in an enlarged scale, of the beam of Figure 1 with a pair of connecting assemblies;
- Figure 3 is a perspective view in a further enlarged scale of a portion of the beam of Figure 2 with one connecting assembly;
- Figure 4 is a cross section of the beam of Figures 2 or 3 in a further enlarged scale along line IV-IV of Figure 3; and
- Figure 5 is an exploded view of the portion of the beam with the connecting assembly of Figures 3 and 4.

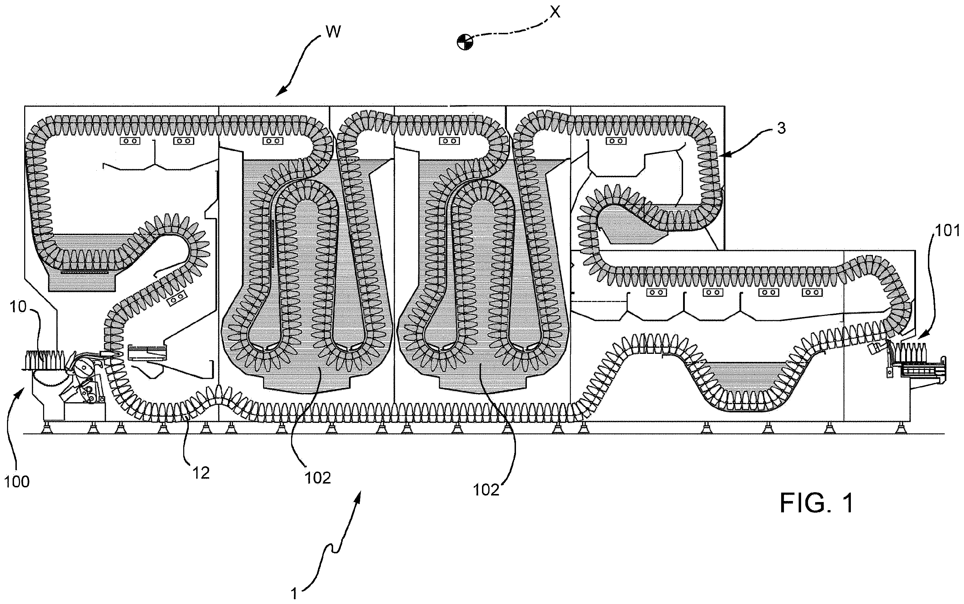

With reference to Figure 1, numeral 1 indicates a washing machine for washing containers 10, in particular empty bottles intended to be filled with a pourable product.

As shown in Figure 1, washing machine 1 essentially comprises:
- an inlet station 100;
- an outlet station 101; and
- a plurality of sequential treatment zones 102 arranged between inlet station 100 and outlet station 101.

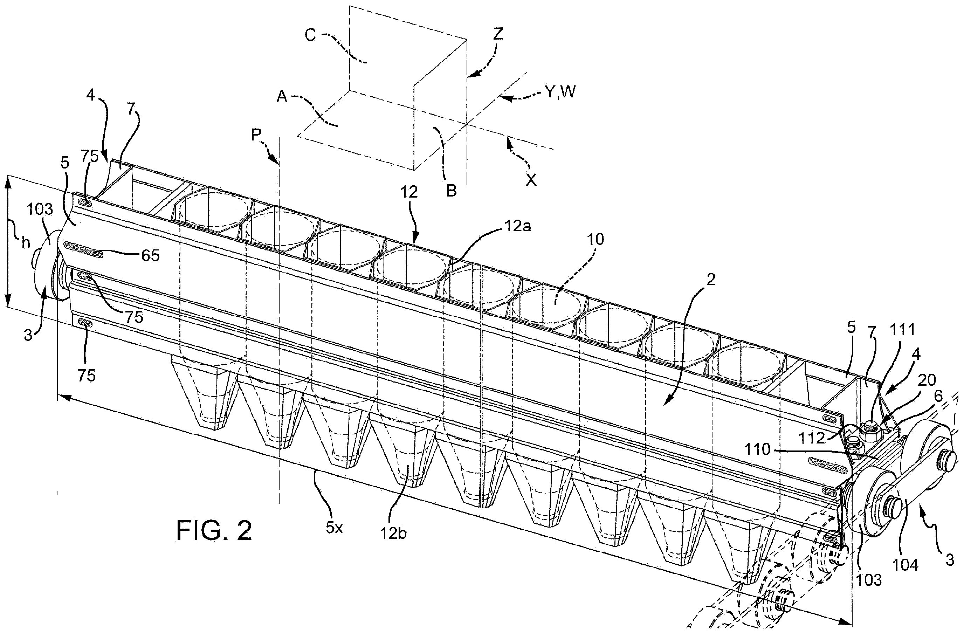

Washing machine 1 further comprises (Figure 2):
- a plurality of beams 2 for carrying respective rows of containers 10 from inlet station 100 to outlet station 101; and
- a conveyor 3 for conveying beams 2 along an endless path W through treatment zones 102.

In the embodiment shown, conveyor 3 is a chain conveyor.

Path W extends between inlet station 100 at which single rows of containers 10 to be washed are loaded on conveyor 3 and outlet station 101 at which single rows of washed containers 10 are discharged.

Furthermore, as shown in Figure 2, each beam 2 comprises:
- two walls 5, extending parallel to a first direction X and spaced from each other along a second direction Y, parallel to path W and transversal to direction X; and
- two connecting assemblies 4, which operatively connect each beam 2 to conveyor 3.

In detail, the two connecting assemblies 4 are arranged on opposite ends of walls 5 along direction X and support beam 2 and relative containers 10 on chain conveyor 3 (Figure 2) .

Each wall 5 has a maximum longitudinal extension 5x along direction X and a height h along a third direction Z, which is transversal to directions X and Y.

In further detail, chain conveyor 3 comprises, at each end of walls 5:
- a not-shown stationary guide, having the shape of path W; and
- a not-shown chain comprising a plurality of links 104 (only two of which are shown in Figure 2) articulated to one another.

In particular, each link 104 comprises a pair of wheels 103 rolling on the relative stationary guide and is connected to the relative end of beam 2 by means of respective connecting assembly 4.

In the following of the present description, reference will be made to a single connecting assembly 4, to relative beam 2 and to relative containers 10 for the sake of simplicity, being connecting assemblies 4 identical to one another.

It is possible to define three reference planes:
- a plane A, defined by directions X and Y;
- a plane B, defined by directions Y and Z; and
- a plane C, defined by directions X and Z.

In detail, it is possible to point out that Figure 1 is a lateral view of machine 1 parallel to plane B.

Beam 2 comprises a plurality of pockets 12, arranged between walls 5 along direction Y and aligned along direction X.

Pockets 12 house containers 10 of the row.

Pockets 12 have respective medial axes P, which are directed parallel to direction Z.

In the embodiment shown, pockets 12 contact with one another along direction X (Figure 2).

In detail, beam 2 receives at inlet station 100, conveys along path W and outlets at outlet station 101 a row of containers 10.

In the embodiment shown, each pocket 12 comprises a parallelepiped portion 12a and a truncated pyramidal portion 12b, sharply joined on each other along direction Z.

In detail, portion 12a receives a main body of one container 10 and portion 12b receives a tapered end portion of container 10.

Rows of containers 10 extend parallel to direction X, in the embodiment shown.

Furthermore, connecting assembly 4 comprises (Figures 2, 3 and 5):
- two plates 6, 7 arranged between walls 5 along direction Y; and
- connecting means 20 for connecting plate 6 and/or plate 7 to wheels 103 of conveyor 3.

Plate 6 is symmetrical with respect to a symmetry plane J, parallel to plane C and has a longitudinal extension 6x along direction X.

In the embodiment shown, plate 6 comprises a right parallelepiped main portion 60 with a constant thickness 6z along direction Z.

Furthermore, in the embodiment shown, thickness 6z is approximately equal to 6 mm and is lower than height h.

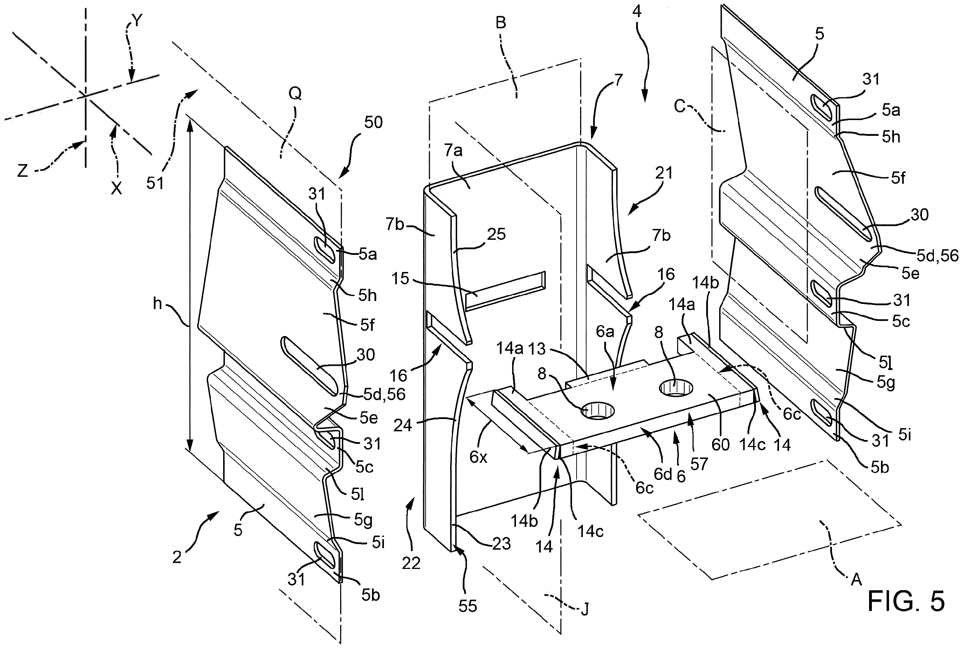

In detail, parallelepiped portion 60 comprises (Figure 5) :
- a face 6a, parallel to plane A; and
- a face 6b, opposite and parallel to face 6a and spaced from face 6a along direction Z by thickness 6z.

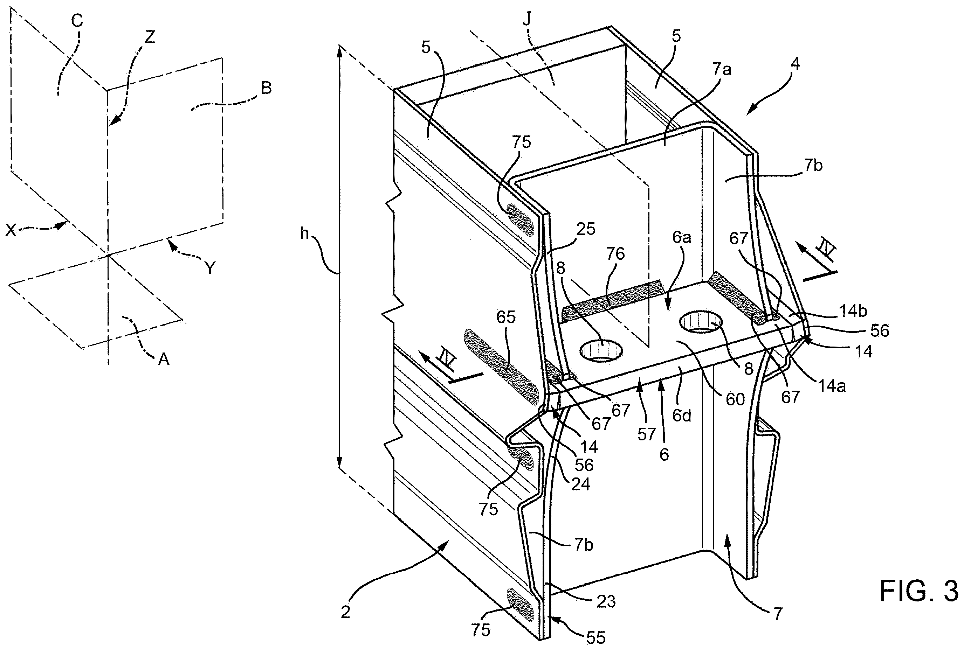

Faces 6a, 6b are respectively arranged upwardly/downwardly in Figures 3 and 5.

Furthermore, faces 6a, 6b are rectangular and define the bases of parallelepiped portion 60.

Parallelepiped portion 60 further comprises four lateral faces, perpendicular and sharply joined to faces 6a, 6b and, more specifically:
- two lateral faces 6c opposite to each other and parallel to plane C; and
- two lateral faces 6d opposite to each other and parallel to plane B.

Plate 6 further comprises holes 8, two in the embodiment shown, which are directed parallel to direction Z and pass from face 6a to face 6b (Figures 3 and 5).

In the embodiment shown, holes 8 are arranged symmetrically with respect to plane J.

Furthermore, in the embodiment shown, connecting means 20 directly connect plate 6 to conveyor 3 and comprise:
- a linking plate 110 connected to link 104 and plate 6;
- a pair of screws 111 passing with play respective holes defined by plate 110 and holes 8 and to which respective nuts 112 are screwed.

In the embodiment shown, holes defined by plate 110 are coaxial with respective holes 8.

Furthermore, holes defined by plate 110 and holes 8 are not threaded.

Plate 7 is symmetrical with respect to plane J and comprises (Figures 3 and 5):
- a planar surface 7a, parallel to plane B; and
- two lateral wings 7b, arranged on opposite sides of planar surface 7a with respect to symmetry plane J and parallel to plane C.

In detail, each lateral wing 7b protrudes from planar surface 7a along direction X (Figures 3 and 5).

Furthermore, each lateral wing 7b is filleted to planar surface 7a.

In the embodiment shown, the thickness of planar surface 7a along direction X and lateral wings 7b along direction Y is approximately 3 mm.

Advantageously, plate 6 is welded to each wall 5 with respective welding seams 65 extending on respective walls 5 throughout the entire longitudinal extension 6x of plate 6 along direction X (Figure 3).

Furthermore, plate 6 is arranged between walls 5 completely within maximum longitudinal extension 5x of walls 5 with reference to direction X (Figures 2 and 3).

In the present description, the expression "completely within maximum longitudinal extension 5x" and similar indicate "inside with respect to direction X" or "aligned along direction Y".

In other words, plate 6 does not protrude from walls 5 along direction X.

Preferably, plate 7 does not protrude from walls 5 along direction X either.

Furthermore, plate 7 extends along direction Z for a distance equal to height h (Figures 2 and 3).

In addition, plate 7 is arranged between walls 5 along direction Z completely within height h.

In other words, plate 7 does not protrude from walls 5 along direction Z.

Furthermore, each wall 5 and plate 6 comprise respective free ends 56, 57 along direction X.

Free ends 56, 57 define the farthermost portion of each wall 5 and plate 6 respectively from portion 7a of plate 7.

Furthermore, free end 57 is parallel to plane B and defined by the face 6d on the opposite side of portion 7a with respect to holes 8.

In detail, free end 57 is within the room defined by free end 56 and surface 7a along direction X.

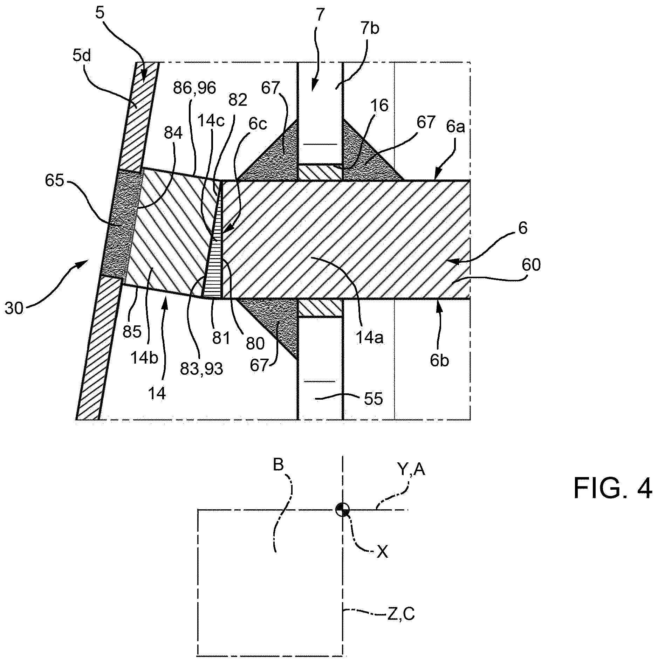

Plate 6 further comprises (Figures 4 and 5):
- a central protrusion 13 symmetrical with respect to plane J and protruding from face 6d of parallelepiped portion 60 facing plate 7; and
- two lateral protrusions 14, each protruding from a respective lateral face 6c and symmetrical to each other with respect to plane J.

Central protrusion 13 is a right parallelepiped with its faces parallel to planes A, B and C.

In detail, the faces of central protrusion 13 upwardly/downwardly arranged in Figure 5 are aligned with homologous faces 6a, 6b of parallelepiped portion 60.

In other words, central protrusion 13 forms an appendix of parallelepiped portion 60 and has the same thickness 6z of parallelepiped portion 60 along direction Z.

Furthermore, central protrusion 13 extends mostly along direction Y and protrudes from parallelepiped portion 60 along direction X towards surface 7a of plate 7.

Lateral protrusions 14 protrude from parallelepiped portion 60 along direction X on the same side of central protrusion 13, i.e. towards surface 7a of plate 7, and define longitudinal extension 6x of plate 6 (Figure 5).

Furthermore, lateral protrusions 14 protrude from respective lateral faces 6c along direction Y (Figures 3, 4 and 5).

In the embodiment shown, lateral protrusions 14 protrude from parallelepiped portion 60 along direction X more than central protrusion 13 (Figure 5).

Furthermore, each lateral protrusion 14 comprises (Figures 4 and 5) :
- a portion 14a, which is parallelepipedal and has its faces upwardly/downwardly arranged in Figures 3 to 5 respectively parallel and aligned with homologous faces 6a, 6b of parallelepiped portion 60;
- an oblique portion 14b; and
- a connection portion 14c, which matches each portion 14a to a respective oblique portion 14b.

Portions 14a are sharply joined to a respective lateral face 6c along direction X.

Furthermore, portions 14a are aligned with the face 6d of plate 6 opposite to central protrusion 13 along direction Y and have the same thickness 6z of parallelepiped portion 60.

Therefore, portions 14a form two appendixes of parallelepiped portion 60.

Furthermore, as shown in Figures 4 and 5, each connection portion 14c is a right prism having the same extension along direction X as portion 14a and with a triangle shaped cross-section in a plane parallel to plane B and orthogonal to direction X.

In detail, the triangle is right-angled and comprises (Figure 4):
- a leg 80, defined by face 6c;
- a leg 81, aligned with face 6b; and
- a hypotenuse 82.

Furthermore, each connection portion 14c is sharply joined to a respective portion 14a along direction X at leg 80.

In detail, the cross-sections parallel to plane B of parallelepiped portion 60, portions 14a and connection portions 14c define an isosceles trapezoid (Figure 5).

Furthermore, each oblique portion 14b is a right parallelepiped extending along direction X with a rectangular shaped cross section.

In detail, the rectangular cross section of oblique portion 14c comprises four sides 83, 84, 85, 86 (Figure 4).

In further detail, side 83 coincides with hypotenuse 82 and side 84 is parallel to side 83.

Sides 85, 86 are perpendicular to sides 83, 84 and parallel to each other.

Sides 83, 84 are inclined at a first angle with respect to direction Y.

Sides 85, 86 are inclined at a second angle with respect to direction Y.

Furthermore, sides 83, 86 of the rectangular cross-section define faces 93, 96 of oblique portion 14b along direction X.

In detail, face 96 is contiguous to portion 14a along direction Y and oblique portions 14b are sharply joined to connection portion 14c at face 93.

Furthermore, each oblique portion 14b extends along direction X for the same length as portion 14a and connection portion 14c.

Each wall 5 comprises a slot 30 directed along direction X and overlapping a respective lateral protrusion 14 of plate 6 (Figures 4 and 5).

In detail, plate 6 is welded to each wall 5 at the contact points between the contour of slots 30 and lateral protrusions 14 by means of welding seam 65.

Furthermore, plates 6, 7 are welded to each other along direction X at lateral wings 7b by means of welding seams 67 and along direction Y at planar surface 7a by means of welding seams 76 (Figures 3 and 4).

Furthermore, each lateral wing 7b is welded to a respective wall 5 of beam 2 along direction X by means of welding seams 75 (Figures 2 and 3).

In detail, plate 7 comprises (Figure 5):
- a rectangular closed contour opening 15 on planar surface 7a, extended mostly along direction Y; and
- two rectangular recesses 16, each on a respective lateral wing 7b and open on the opposite side of surface 7a.

In detail, recesses 16 extend mostly along direction X and preferably throughout each lateral wing 7b (Figure 5).

Central protrusion 13 fits opening 15 and each lateral protrusion 14 fits a respective recess 16.

In detail, recesses 16 act as guides for the insertion of plate 6.

Furthermore, each lateral wing 7b comprises an edge 55 along direction Y.

Plates 6, 7 are welded to each other at the contact points between the contour of recesses 16 and lateral protrusions 14 with welding seams 67 (Figures 3 and 4).

Preferably, each recess 16 is welded to a respective lateral protrusion 14 with three welding seams 67 (Figure 4) .

In detail, two welding seams 67 extend along direction X on plate 6 on the side of face 6a and on both sides of each lateral wing 7b with respect to direction Y.

One further welding seam 67 extends along direction X on plate 6 on the side of face 6b and on each lateral wing 7b on the side facing respective wall 5.

Furthermore, it is possible to define two halves 21, 22 of plate 7 with respect to direction Z (top and bottom in Figure 5, respectively).

In detail, opening 15 and recesses 16 are completely formed in half 21 and are aligned with one another.

In other words, opening 15 and recesses 16 are formed at the same position of plate 7 along direction Z.

Furthermore, proceeding from half 22 to half 21, each edge 55 of each lateral wing 7b comprises:
- a stretch 23, in which edge 55 is parallel to plane B;
- a stretch 24, in which edge 55 moves away from plane B along direction X; and
- a stretch 25, in which edge 55 moves close to plane B along direction X.

Stretches 23, 24 are contiguous to each other.

Each recess 16 is interposed between respective stretches 24, 25 of edge 55 along direction Z.

Furthermore, stretch 25 is completely included in half 21 and stretch 23 is completely included in half 22. Stretch 24 extends in both halves 21 and 22.

In the embodiment shown, walls 5 are symmetric to each other with respect to plane J (Figures 3 and 5).

Furthermore, each wall 5 comprises two opposite stretches 5a, 5b, which are parallel to plane C and are arranged at the vertical ends of walls 5 along direction Z.

In detail, stretches 5a, 5b are aligned to each other and define a plane Q, parallel to plane C (Figure 5).

Each wall 5 further comprises a stretch 5c, which is aligned to stretches 5a, 5b and is interposed between them.

Each wall 5 contacts a respective lateral wing 7b at stretches 5a, 5b, 5c.

Furthermore, plane Q defines two sides 50, 51 of each wall 5, opposite to each other, with side 50 facing the respective lateral wing 7b (Figure 5).

Each wall 5 further comprises:
- a stretch 5d, planar and transversal to plane Q; and
- a triangularly-shaped stretch 5e, substantially arranged on side 51.

Preferably, stretch 5d define respective ends 56 of walls 5.

More precisely, end 57 is within the room defined by stretch 5d and surface 7a along direction X.

Stretches 5d, 5e are contiguous to each other along direction Z and interposed between stretches 5a and 5c.

In addition, stretch 5e is contiguous to stretch 5c with respect to direction Z.

In detail, each wall 5 contacts plate 6 at stretch 5d, at which slot 30 is formed.

Furthermore, stretch 5d is parallel to face 93 of oblique portion 14b.

Furthermore, each wall 5 comprises planar stretches 5f, 5g.

In detail, proceeding from stretch 5b to stretch 5a, stretch 5g moves towards side 51 of plane Q and stretch 5f moves towards side 50 of plane Q.

Furthermore, stretch 5f is contiguous to stretch 5d and stretch 5g is interposed between stretches 5b and 5c along direction Z.

Each wall 5 comprises also three connecting stretches:
- a stretch 5h, joining stretch 5f to stretch 5a;
- a stretch 5i, joining stretch 5b to stretch 5g; and
- a stretch 51, joining stretch 5g to stretch 5c.

Stretches 5h, 5i, 51 are planar and transversal to plane Q.

Furthermore, each wall 5 comprises three slots 31 formed at respective stretches 5a, 5b, 5c (Figure 3).

Slots 31 are parallel to one another and to slot 30 and extend along direction X.

In detail, plate 7 is welded to each wall 5 at the contact points between the contour of slots 31 and lateral wings 7b with respective welding seams 75 (Figures 2 and 3).

Welding seams 75 are aligned with one another and with welding seam 65 along direction X.

Furthermore, welding seams 65, 75 are spaced from end 56 along direction X.

During the mounting process, plate 6 is matched to plate 7 by fitting central protrusion 13 in opening 15 and lateral protrusions 14 through recesses 16.

Both lateral protrusions 14 protrude from recesses 16 along direction Y when fitted through recesses 16.

Plates 6 and 7 are then welded to each other along direction Y with welding seam 76 at the contact points between central protrusion 13 and the contour of opening 15 and along direction X with welding seams 67 at the contact points between lateral protrusions 14 and the contour of recesses 16.

At this stage, plates 6 and 7 are integral to each other.

Plates 6, 7 are then arranged between walls 5 along direction Y, so as to overlap each slot 30 with the respective lateral protrusion 14 and slots 31 with lateral wings 7b.

Furthermore, plate 6 is positioned along direction X so as not to protrude from walls 5 and free ends 56, 57 are aligned with one another.

In addition, plate 7 is positioned along directions X and Z so as not to protrude from walls 5.

Plate 6 is then welded to each wall 5 along direction X at the contact points between each lateral protrusion 14 and the contour of respective slot 30 with welding seam 65 throughout longitudinal extension 6x of plate 6.

Similarly, plate 7 is welded to each wall 5 along direction X at the contact points between lateral wings 7b and the contour of slots 31 with welding seams 75.

At this stage, plates 6, 7 are integral with beam 2.

The same mounting operation is carried out also for the other connecting assembly 4, arranged on the opposite end of beam 2 along direction X.

Screws 111 of connecting means 20 are then inserted in holes 8 of plate 6 and of linking plate 110, nuts 112 are screwed on screws 111, and beam 2 is thus connected to wheels 103 of conveyor 3.

The advantages of beam 2 and of the method according to the present invention will be clear from the above description.

In particular, plate 6 is welded to walls 5 with welding seams 65, which extend along direction X throughout longitudinal extension 6x of plate 6.

It has been experimentally verified that as a consequence of this, the risk of fatigue failures is substantially reduced with respect to the known connecting assemblies.

Consequently, the maintenance operations of machine 1 may be carried out less frequently and the service life of machine 1 may be extended.

Furthermore, welding seams 67, 75, 76 contribute to reduce the risk of fatigue failures of connecting assembly 4, because they improve the connection between plates 6, 7 and walls 5.

Furthermore, since plate 6 is arranged between walls 5 completely within maximum longitudinal extension 5x of walls 5 and free end 57 is completely within the room defined by free end 56 and surface 7a along direction X, the design of plate 6 is improved.

In fact, the risk that plate 6 could interfere with conveyor 3 is substantially limited.

Finally, it is apparent that modifications and variants not departing from the scope of protection of the claims may be made to beam 2 and to the method according to the present invention.

In particular, plate 6 could be welded to only one of two walls 5 with one welding seam 65 along direction X.

Recesses 16 could be formed as closed-contour openings.

Each recess 16 could be welded to respective lateral wings 7b with four welding seams 67.

Furthermore, walls 5 could have any shape compatible with the execution of the present invention.

As an example, walls 5 could be shaped as planar surfaces, parallel to plane C.

Furthermore, each wall 5 could be welded to lateral wings 7b at stretches other than 5a, 5b, 5c.

## Claims

1. A beam (2) for a washing machine (1) for washing containers (10), comprising:
- a plurality of pockets (12) for housing respective containers (10);
- at least one connecting assembly (4) for connecting said beam (2) to a conveyor (3) of said washing machine (1); and
- two walls (5) elongated parallel to a first direction (X) and spaced from each other along a second direction (Y), which extends transversal to said first direction (X);
each said connecting assembly (4) comprising:
- a first plate (6) arranged between said two walls (5) along said second direction (Y); and
- connecting means (20) for connecting said first plate (6) to said conveyor (3);
said first plate (6) having a first longitudinal extension (6x) along said first direction (X);
wherein said first plate (6) and a second plate (7) are arranged between said two walls (5) along the second direction (Y) and said first plate (6) and said second plate (7) are welded to each other;
**characterized in that** said first plate (6) is welded to at least one of said two walls (5) with a first welding seam (65) extending on said wall (5) along said first direction (X) throughout the entire said first longitudinal extension (6x) of said first plate (6).

2. The beam of claim 1, **characterized in that** said first plate (6) is welded to both said two walls (5) with respective said first welding seams (65) extending on each wall (5) along said first direction (X) throughout the entire said first longitudinal extension (6x) of said first plate (6) .

3. The beam of claims 1 or 2, **characterized in that** said walls (5) have a second maximum longitudinal extension (5x) along said first direction (X) and **in that** said first plate (6) is arranged between said at least two walls (5) completely within said second maximum longitudinal extension (5x) with reference to said first direction (X).

4. The beam of any one of the foregoing claims, **characterized in that** said first plate (6) comprises a parallelepiped portion (60);
said parallelepiped portion (60) having a thickness (6z) along a third direction (Z) and comprising:
- a first face (6a), parallel to a first plane (A);
- a second face (6b), parallel and opposite to said first face (6a) and spaced from said first face (6a) along said third direction (Z) by said thickness (6z);
- first two lateral faces (6d), parallel to a second plane (B) on respective opposite first sides of said first, second faces (6a, 6b) and opposite to each other along said first direction (X); and
- second two lateral faces (6c), parallel to a third plane (C) on respective opposite second sides of said first, second faces (6a, 6b) and opposite to each other along said second direction (Y);
said first plate (6) further comprising two lateral protrusions (14), each protruding from a respective said second lateral face (6c) along said second direction (Y);
said lateral protrusions (14) being elongated parallel to said first direction (X);
each said wall (5) comprising at least one slot (30), elongated parallel to said first direction (X), which overlaps a respective one of said two lateral protrusions (14) ;
said first plate (6) being welded to each said wall (5) by means of said first welding seam (65) at the contact points between the contour of respective said slot (30) and respective said lateral protrusion (14);
said third direction (Z) being transversal to said first and second directions (X, Y);
said first plane (A) being defined by said first and second directions (X, Y);
said second plane (B), defined by said second and third directions (Y, Z);
said third plane (C), defined by said first and third directions (X, Z).

5. The beam of claim 4, comprising a second plate (7) arranged between said two walls (5) and comprising, in turn:
- a planar surface (7a), parallel to said second plane (B); and
- two lateral wings (7b) parallel to said third plane (C) and protruding from said planar surface (7a) on opposite respective third sides of said planar surface (7a) along said first direction (X);
**characterized in that** said first and second plates (6, 7) are welded to each other along said first direction (X) at said two lateral wings (7b) by means of second welding seams (67) and/or along said second direction (Y) at said planar surface (7a) by means of a third welding seam (76).

6. The beam of claim 5, **characterized in that** each of said two lateral wings (7b) is formed with a recess (16), elongated parallel to said first direction (X);
each of said recesses (16) being engaged by a respective lateral protrusion (14) of said first plate (6);
said first plate (6) and said second plate (7) being welded along said first direction (X) at the contact points between each said lateral protrusion (14) and the contour of respective said recess (16) with said second welding seams (67) .

7. The beam of claims 5 or 6, **characterized in that** said first plate (6) and said second plate (7) are symmetrical with respect to a symmetry plane (J), which is parallel to said third plane (C);
one of said first lateral faces (6d) facing said second plate (7);
said first plate (6) comprising a central protrusion (13), which protrude along said first direction (X) from said one of said first lateral faces (6d) facing said second plate (7) and elongated parallel to said second direction (Y) ;
said planar surface (7a) being formed with an opening (15), elongated parallel to said second direction (Y) and engaged by said central protrusion (13) of said first plate (6);
said first and second plates (6, 7) being welded at the contact points between the contour of said opening (15) and said central protrusion (13) along said second direction (Y) with said third welding seam (76).

8. The beam of claims 6 or 7, **characterized in that** each said lateral protrusion (14) and respective said recess (16) are welded with three said second welding seams (67);
two of said three second welding seams (67) being formed on said first plate (6) on the side of said first face (6a) and on respective opposite fourth sides of each said lateral wing (7b) with respect to said second direction (Y);
one of said three second welding seams (67) being formed on said first plate (6) on the side of said second face (6b) and on the side of each said lateral wing (7b) facing said wall (5).

9. The beam of claims 5 to 8, **characterized in that** each said wall (5) comprises at least one further slot (31) extending parallel to said first direction (X);
said lateral wing (7b) being welded to the contour of said further slot (31) by means of respective fourth welding seam (75).

10. The beam of claim 9, **characterized in that** each said wall (5) comprises at least:
- a first and a second stretch (5a, 5b), which are parallel to said third plane (C) and are arranged at the vertical ends of said walls (5) along said third direction (Z) ; and
- a third stretch (5c), which is parallel to said first and second stretches (5a, 5b) and interposed between said first and second stretches (5a, 5b);
said first, second and third stretches (5a, 5b, 5c) being the stretches of said walls (5) closest to said lateral wings (7b);
each said wall (5) comprising three said further slots (31), each formed on a respective first, second, third stretch (5a, 5b, 5c);
said slot (30) being interposed between said first and third stretches (5a, 5c) along said third direction (Z).

11. A washing machine (1) for washing containers (10), comprising:
- a plurality of beams (2) according to any one of the foregoing claims;
- said conveyor (3) for conveying said plurality of beams (2) along a path (W) through said machine (1); and
- a plurality of said connecting assemblies (4), which operatively connect said plurality of beams (2) to said conveyor (3).

12. A method for connecting a wall (5) of a beam (2) to a connecting assembly (4) of said beam (2); said connecting assembly (4) being adapted to connect said beam (2) to a conveyor (3) of a washing machine (1) for washing containers (10), comprising the steps of:
i) matching a first plate (6) and a second plate (7) of said connecting assembly (4);
ii) welding said first plate (6) and said second plate (7) to each other; and
iii) arranging said first and second plates (6, 7) between two said walls (5) of said beam (2);
said two walls (5) being elongated parallel to a first direction (X) and spaced from each other along a second direction (Y), which is transversal to said first direction (X) ;
said first plate (6) having a first longitudinal extension (6x) along said first direction (X);
**characterized by** comprising the further step of:
iv) welding said first plate (6) to at least one of said two walls (5) with a first welding seam (65) extending along said first direction (X) throughout the entire said first longitudinal extension (6x) of said first plate (6).

13. The method of claim 12, **characterized by** comprising the further step of:
v) welding said first plate (6) to both said two walls (5) with respective said first welding seams (65) extending along said first direction (X) throughout the entire said first longitudinal extension (6x) of said first plate (6).

14. The method of claims 12 or 13, **characterized in that** said step iii) comprises the sub-step of:
vi) arranging said first plate (6) between said two walls (5) completely within a second maximum longitudinal extension (5x) of said two walls (5) with reference to said first direction (X);
said second maximum longitudinal extension (5x) being measured along said first direction (X).

15. The method of claims 12 to 14, **characterized in that** said step iv) further comprises the sub-steps of:
vii) overlapping a slot (30) of each wall (5) to one of two lateral protrusions (14) of said first plate (6);
said first plate (6) comprising first two lateral faces (6c) parallel to a first plane (C) and opposite to each other;
said first plane (C) being defined by said first direction (X) and a third direction (Z), transversal to said first and second directions (X, Y);
each of said two lateral protrusions (14) protruding from one respective said first lateral face (6c) along said second direction (Y);
said slot (30) and said lateral protrusion (14) being elongated parallel to said first direction (X); and
viii) welding said first plate (6) to each said wall (5) at the contact points between the contour of said slot (30) and said respective lateral protrusion (14), by means of said first welding seams (65).

16. The method of claim 15, **characterized in that** said step i) comprises the sub-step of:
ix) fitting said lateral protrusions (14) of said first plate (6) in respective recesses (16) of said second plate (7) ;
said second plate (7) comprising two lateral wings (7b), parallel to said first plane (C);
said recesses (16) being formed at said lateral wings (7b) of said second plate (7) and being elongated parallel to said first direction (X);
said step i) further comprising a sub-step x) of fitting a central protrusion (13) of said first plate (6) in an opening (15) of said second plate (7);
said first plate (6) comprising second two lateral faces (6d) parallel to a second plane (B), opposite to each other and perpendicular to said first two lateral faces (6c);
said second plane (B) being defined by said second and third directions (Y, Z) and transversal to said first plane (C) ;
said central protrusion (13) protruding along said first direction (X) from one of said second lateral faces (6d) facing said second plate (7);
said opening (15) being formed in a planar surface (7a) of said second plate (7);
said planar surface (7a) being parallel to said second plane (B);
said lateral wings (7b) protruding from said planar surface (7a) along said first direction (X) on respective opposite first sides of said planar surface (7a) with respect to said second direction (Y);
said opening (15) and said central protrusion (13) being elongated parallel to said second direction (Y).

17. The method of claim 16, **characterized in that** said step ii) comprises the sub-steps of:
xi) welding said first and second plates (6, 7) at the contact points between said lateral protrusions (14) and the contour of said recesses (16) along said first direction (X), so as to form a second welding seam (67) and/or between said central protrusion (13) and said opening (15) along said second direction (Y), so as to form a third welding seam (76).

18. The method of claims 16 or 17, **characterized by** comprising the further step of:
xii) welding said lateral wings (7b) to further slots (31) of said walls (5), so as to form fourth welding seams (75);
said further slots (31) extending along said first direction (X).

## Patentansprüche

1. Träger (2) für eine Waschmaschine (1) zum Waschen von Behältern (10), Folgendes umfassend:
- mehrere Aussparungen (12) zur Aufnahme jeweiliger Behälter (10);
- mindestens eine Verbindungsanordnung (4) zum Verbinden des Trägers (2) mit einem Förderer (3) der Waschmaschine (1) und
- zwei Wände (5), die sich parallel zu einer ersten Richtung (X) ausdehnen und entlang einer zweiten Richtung (Y), die sich quer zur ersten Richtung (X) erstreckt, voneinander beabstandet sind;
wobei jede Verbindungsanordnung (4) Folgendes umfasst:
- eine erste Platte (6), die zwischen den zwei Wänden (5) entlang der zweiten Richtung (Y) angeordnet ist; und
- eine Verbindungseinrichtung (20) zum Verbinden der ersten Platte (6) mit dem Förderer (3);
wobei die erste Platte (6) eine erste Längsausdehnung (6x) entlang der ersten Richtung (X) aufweist;
wobei die erste Platte (6) und die zweite Platte (7) zwischen den zwei Wänden (5) entlang der zweiten Richtung (Y) angeordnet sind und die erste Platte (6) und die zweite Platte (7) miteinander verschweißt sind;
**dadurch gekennzeichnet, dass** die erste Platte (6) mit mindestens einer der zwei Wände (5) verschweißt ist, wobei sich eine erste Schweißnaht (65) an der ersten Wand (5) entlang der ersten Richtung (X) über die gesamte erste Längsausdehnung (6x) der ersten Platte (6) erstreckt.

2. Träger nach Anspruch 1, **dadurch gekennzeichnet, dass** die erste Platte (6) mit beiden Wänden (5) verschweißt ist, wobei sich die ersten Schweißnähte (65) jeweils an jeder Wand (5) entlang der ersten Richtung (X) über die gesamte erste Längsausdehnung (6x) der ersten Platte (6) erstrecken.

3. Träger nach Anspruch 1 oder 2, **dadurch gekennzeichnet, dass** die Wände (5) eine zweite maximale Längsausdehnung (5x) entlang der ersten Richtung (X) aufweisen, und dadurch, dass die erste Platte (6) zwischen den mindestens zwei Wänden (5) vollständig innerhalb der zweiten maximalen Längsausdehnung (5x) in Bezug zur ersten Richtung (X) angeordnet ist.

4. Träger nach einem der vorstehenden Ansprüche, **dadurch gekennzeichnet, dass** die erste Platte (6) einen Parallelepipedabschnitt (60) umfasst;
wobei der Parallelepipedabschnitt (60) eine Stärke (6z) entlang einer dritten Richtung (Z) aufweist und Folgendes umfasst:
- eine erste Fläche (6a), die parallel zu einer ersten Ebene (A) ist;
- eine zweite Fläche (6b), die parallel und entgegengesetzt zur ersten Fläche (6a) angeordnet und von der ersten Fläche (6a) entlang der dritten Richtung (Z) um die Stärke (6z) beabstandet ist;
- zwei erste Seitenflächen (6d), die parallel zu einer zweiten Ebene (B) auf jeweils entgegengesetzten ersten Seiten der ersten, zweiten Flächen (6a, 6b) verlaufen und einander entlang der ersten Richtung (X) entgegengesetzt sind; und
- zwei zweite Seitenflächen (6c), die parallel zu einer dritten Ebene (C) auf jeweils entgegengesetzten zweiten Seiten der ersten, zweiten Flächen (6a, 6b) verlaufen und einander entlang der zweiten Richtung (Y) entgegengesetzt sind;
wobei die erste Platte (6) ferner zwei seitliche Vorsprünge (14) umfasst, die jeweils von einer jeweiligen zweiten Seitenfläche (6c) entlang der zweiten Richtung (Y) vorstehen;
wobei sich die seitlichen Vorsprünge (14) parallel zur ersten Richtung (X) ausdehnen;
wobei jede Wand (5) mindestens einen Schlitz (30) umfasst, der sich parallel zur ersten Richtung (X) ausdehnt, der einen jeweiligen der zwei seitlichen Vorsprünge (14) überlagert;
wobei die erste Platte (6) mittels der ersten Schweißnaht (65) an den Kontaktpunkten zwischen der Kontur des jeweiligen Schlitzes (30) und dem jeweiligen seitlichen Vorsprung (14) mit jeder Wand (5) verschweißt ist; wobei die dritte Richtung (Z) quer zur ersten und zweiten Richtung (X, Y) ist;
wobei die erste Ebene (A) durch die erste und zweite Richtung (X, Y) definiert ist;
wobei die zweite Ebene (B) durch die zweite und dritte Richtung (Y, Z) definiert ist;
wobei die dritte Ebene (C) durch die erste und dritte Richtung (X, Z) definiert ist.

5. Träger nach Anspruch 4, umfassend eine zweite Platte (7), die zwischen den zwei Wänden (5) angeordnet ist und wiederum Folgendes umfasst:
- eine plane Fläche (7a), die parallel zur zweiten Ebene (B) ist; und
- zwei seitliche Flügel (7b), die parallel zur dritten Ebene (C) sind und von der planen Fläche (7a) auf entgegengesetzten jeweiligen dritten Seiten der planen Fläche (7a) entlang der ersten Richtung (X) vorstehen; **dadurch gekennzeichnet, dass** die erste und zweite Platte (6, 7) entlang der ersten Richtung (X) an den zwei seitlichen Flügeln (7b) mittels zweiter Schweißnähte (67) und/oder entlang der zweiten Richtung (Y) an der planen Fläche (7a) mittels einer dritten Schweißnaht (76) miteinander verschweißt sind.

6. Träger nach Anspruch 5, **dadurch gekennzeichnet, dass** jeder der zwei seitlichen Flügel (7b) mit einer Vertiefung (16) ausgebildet ist, die sich parallel zur ersten Richtung (X) ausdehnt;
wobei jede der Vertiefungen (16) durch einen jeweiligen seitlichen Vorsprung (14) der ersten Platte (6) eingegriffen ist;
wobei die erste Platte (6) und die zweite Platte (7) entlang der ersten Richtung (X) an den Kontaktpunkten zwischen jedem seitlichen Vorsprung (14) und der Kontur der jeweiligen Vertiefung (16) mit den zweiten Schweißnähten (67) verschweißt sind.

7. Träger nach Anspruch 5 oder 6, **dadurch gekennzeichnet, dass** die erste Platte (6) und die zweite Platte (7) in Bezug zu einer Symmetrieebene (J), die parallel zur dritten Ebene (C) ist, symmetrisch sind; wobei eine der ersten Seitenflächen (6d) der zweiten Platte (7) zugewandt ist;
wobei die erste Platte (6) einen mittigen Vorsprung (13) umfasst, der entlang der ersten Richtung (X) von der einen der ersten Seitenflächen (6d), die der zweiten Platte (7) zugewandt ist, vorsteht und sich parallel zur zweiten Richtung (y) ausdehnt;
wobei die plane Fläche (7a) mit einer Öffnung (15) ausgebildet ist, die sich parallel zur zweiten Richtung (Y) ausdehnt und durch den mittigen Vorsprung (13) der ersten Platte (6) eingegriffen wird;
wobei die erste und zweite Platte (6, 7) an den Kontaktpunkten zwischen der Kontur der Öffnung (15) und dem mittigen Vorsprung (13) entlang der zweiten Richtung (Y) mit der dritten Schweißnaht (76) verschweißt sind.

8. Träger nach Anspruch 6 oder 7, **dadurch gekennzeichnet, dass** der seitliche Vorsprung (14) und die jeweilige Vertiefung (16) mit drei zweiten Schweißnähten (67) verschweißt sind;
wobei zwei der drei zweiten Schweißnähte (67) an der ersten Platte (6) auf der Seite der ersten Fläche (6a) und an jeweiligen entgegengesetzten vierten Seiten jedes seitlichen Flügels (7b) in Bezug zur zweiten Richtung (Y) ausgebildet sind;
wobei eine der drei zweiten Schweißnähte (67) an der ersten Platte (6) auf der Seite der zweiten Fläche (6b) und auf der der Wand (5) zugewandten Seite jedes seitlichen Flügels (7b) ausgebildet sind.

9. Träger nach Anspruch 5 bis 8, **dadurch gekennzeichnet, dass** jede Wand (5) mindestens einen weiteren Schlitz (31) umfasst, der sich parallel zur ersten Richtung (X) erstreckt;
wobei der seitliche Flügel (7b) mit der Kontur des weiteren Schlitzes (31) mittels einer jeweiligen vierten Schweißnaht (75) verschweißt ist.

10. Träger nach Anspruch 9, **dadurch gekennzeichnet, dass** die Wand (5) zumindest Folgendes umfasst:
- eine erste und eine zweite Ausdehnung (5a, 5b), die parallel zur dritten Ebene (C) und an den vertikalen Enden der Wände (5) entlang der dritten Richtung (Z) angeordnet sind; und
- eine dritte Ausdehnung (5c), die parallel zur ersten und zweiten Ausdehnung (5a, 5b) und zwischen der ersten und zweiten Ausdehnung (5a, 5b) angeordnet ist;
wobei die erste, zweite und dritte Ausdehnung (5a, 5b, 5c) die Ausdehnungen der Wände (5) sind, die den seitlichen Flügeln (7b) am nächsten sind;
wobei jede Wand (5) drei weitere Schlitze (31) umfasst, die jeweils an einer jeweiligen ersten, zweiten, dritten Ausdehnung (5a, 5b, 5c) ausgebildet sind;
wobei der Schlitz (30) zwischen der ersten und zweiten Ausdehnung (5a, 5c) entlang der dritten Richtung (Z) angeordnet ist.

11. Waschmaschine (1) zum Waschen von Behältern (10), Folgendes umfassend:
- mehrere Träger (2) nach einem der vorstehenden Ansprüche;
- den Förderer (3) zum Fördern der mehreren Träger (2) entlang einer Strecke (W) durch die Maschine (1) und
- mehrere Verbindungsanordnungen (4), die die mehreren Träger (2) mit dem Förderer (3) wirkverbinden.

12. Verfahren zum Verbinden einer Wand (5) eines Trägers (2) mit einer Verbindungsanordnung (4) des Trägers (2); wobei die Verbindungsanordnung (4) dazu eingerichtet ist, den Träger (2) mit einem Förderer (3) einer Waschmaschine (1) zum Waschen von Behältern (10) zu verbinden, die folgenden Schritte umfassend:
i) Verbinden einer ersten Platte (6) und einer zweiten Platte (7) der Verbindungsanordnung (4);
ii) Verschweißen der ersten Platte (6) und der zweiten Platte (7) miteinander und
iii) Anordnen der ersten und zweiten Platte (6, 7) zwischen zwei Wänden (5) des Trägers (2);
wobei sich die zwei Wände (5) parallel zu einer ersten Richtung (X) ausdehnen und entlang einer zweiten Richtung (Y), die sich quer zur ersten Richtung (X) erstreckt, voneinander beabstandet sind;
wobei die erste Platte (6) eine erste Längsausdehnung (6x) entlang der ersten Richtung (X) aufweist;
**gekennzeichnet durch** das Umfassen des weiteren Schritts: iv) Verschweißen der ersten Platte (6) mit mindestens einer der zwei Wände (5), wobei sich mindestens eine erste Schweißnaht (65) entlang der ersten Richtung (X) über die gesamte erste Längsausdehnung (6x) der ersten Platte (6) erstreckt.

13. Verfahren nach Anspruch 12, **gekennzeichnet durch** das Umfassen des weiteren Schritts:
v) Verschweißen der ersten Platte (6) mit beiden Wänden (5), wobei sich jeweilige erste Schweißnähte (65) entlang der ersten Richtung (X) über die gesamte erste Längsausdehnung (6x) der ersten Platte (6) erstrecken.

14. Verfahren nach Anspruch 12 oder 13, **dadurch gekennzeichnet, dass** Schritt iii) den folgenden Teilschritt umfasst:
vi) Anordnen der ersten Platte (6) zwischen den zwei Wänden (5) vollständig innerhalb einer zweiten maximale Längsausdehnung (5x) der zwei Wände (5) in Bezug zur ersten Richtung (X);
wobei die zweite maximale Längsausdehnung (5x) entlang der ersten Richtung (X) gemessen wird.

15. Verfahren nach Anspruch 12 bis 14, **dadurch gekennzeichnet, dass** Schritt iv) die folgenden Teilschritte umfasst:
vii) Überlagern eines Schlitzes (30) jeder Wand (5) mit einem von zwei seitlichen Vorsprüngen (14) der ersten Platte (6);
wobei die erste Platte (6) zwei erste Seitenflächen (6c) parallel zu einer ersten Ebene (C) und einander entgegengesetzt umfasst;
wobei die erste Ebene (C) durch die erste Richtung (X) und eine dritte Richtung (Z), die quer zur ersten und zweiten Richtung (X, Y) verläuft, definiert ist;
wobei jeder der zwei seitlichen Vorsprünge (14) von einer jeweiligen ersten Seitenfläche (6c) entlang der zweiten Richtung (Y) vorsteht;
wobei sich der Schlitz (30) und der seitliche Vorsprung (14) parallel zur ersten Richtung (X) ausdehnen und viii) Verschweißen der ersten Platte (6) mit jeder Wand (5) an den Kontaktpunkten zwischen der Kontur des Schlitzes (30) und dem jeweiligen seitlichen Vorsprung (14) mittels der ersten Schweißnähte (65).

16. Verfahren nach Anspruch 15, **dadurch gekennzeichnet, dass** Schritt i) den folgenden Teilschritt umfasst:
ix) Einsetzen der seitlichen Vorsprünge (14) der ersten Platte (6) in jeweilige Vertiefungen (16) der zweiten Platte (7);
wobei die zweite Platte (7) zwei seitliche Flügel (7b) umfasst, die parallel zur ersten Ebene (C) sind;
wobei die Vertiefungen (16) an den seitlichen Flügeln (7b) der zweiten Platte (7) ausgebildet sind und sich parallel zur ersten Richtung (X) ausdehnen;
wobei Schritt i) ferner einen Teilschritt x) umfasst, der das Einsetzen eines mittigen Vorsprungs (13) der ersten Platte (6) in eine Öffnung (15) der zweiten Platte (7) umfasst;
wobei die erste Platte (6) zwei zweite Seitenflächen (6d) umfasst, die parallel zu einer zweiten Ebene (B), einander entgegengesetzt und senkrecht zu den ersten zwei Seitenflächen (6c) sind;
wobei die zweite Ebene (B) durch die zweite und dritte Richtung (Y, Z) und quer zur ersten Ebene (C) definiert ist;
wobei der mittige Vorsprung (13) entlang der ersten Richtung (X) von einer der zweiten Seitenflächen (6d), die der zweiten Platte (7) zugewandt ist, vorsteht; wobei die Öffnung (15) in einer planen Fläche (7a) der zweiten Platte (7) ausgebildet ist;
wobei die plane Fläche (7a) parallel zur zweiten Ebene (B) ist;
wobei die seitlichen Flügel (7b) von der planen Fläche (7a) entlang der ersten Richtung (X) auf jeweils entgegengesetzten ersten Seiten der ersten Seiten der planen Fläche (7a) in Bezug zur zweiten Richtung (Y) vorstehen;
wobei sich die Öffnung (15) und der mittige Vorsprung (13) parallel zur zweiten Richtung (Y) ausdehnen.

17. Verfahren nach Anspruch 16, **dadurch gekennzeichnet, dass** Schritt ii) die folgenden Teilschritte umfasst:
xi) Verschweißen der ersten und zweiten Platte (6, 7) an den Kontaktpunkten zwischen den seitlichen Vorsprüngen (14) und der Kontur der Vertiefungen (16) entlang der ersten Richtung (X), um eine zweite Schweißnaht (67) auszubilden, und/oder zwischen dem mittigen Vorsprung (13) und der Öffnung (15) entlang der zweiten Richtung (Y), um eine dritte Schweißnaht (76) auszubilden.

18. Verfahren nach Anspruch 16 oder 17, **gekennzeichnet durch** das Umfassen des weiteren Schritts:
xii) Verschweißen der seitlichen Flügel (7b) mit weiteren Schlitzen (31) der Wände (5), um vierte Schweißnähte (75) auszubilden;
wobei sich die weiteren Schlitze (31) entlang der ersten Richtung (X) erstrecken.

## Revendications

1. Poutre (2) pour machine à laver (1) destinée à laver des récipients (10), comprenant :
- une pluralité de poches (12) destinées à accueillir des récipients (10) respectifs ;
- au moins un ensemble de connexion (4) destiné à connecter ladite poutre (2) à un convoyeur (3) de ladite machine à laver (1) ; et
- deux parois (5) allongées parallèlement à une première direction (X) et espacées l'une de l'autre le long d'une deuxième direction (Y), qui s'étend transversalement à ladite première direction (X) ;
chacun desdits ensembles de connexion (4) comprenant :
- une première plaque (6) disposée entre lesdites deux parois (5) le long de ladite deuxième direction (Y) ; et
- un moyen de connexion (20) pour connecter ladite première plaque (6) audit convoyeur (3) ;
ladite première plaque (6) ayant une première extension longitudinale (6x) le long de ladite première direction (X) ;
ladite première plaque (6) et une seconde plaque (7) étant disposées entre lesdites deux parois (5) le long de la deuxième direction (Y) et ladite première plaque (6) et ladite seconde plaque (7) étant soudées l'une à l'autre ;
**caractérisée en ce que** ladite première plaque (6) est soudée à au moins l'une desdites deux parois (5) avec un premier cordon de soudure (65) s'étendant sur ladite paroi (5) le long de ladite première direction (X) sur toute ladite première extension longitudinale (6x) de ladite première plaque (6).

2. Poutre selon la revendication 1, **caractérisée en ce que** ladite première plaque (6) est soudée auxdites deux parois (5), lesdits premiers cordons de soudure (65) respectifs s'étendant sur chaque paroi (5) le long de ladite première direction (X) sur toute ladite première extension longitudinale (6x) de ladite première plaque (6) .

3. Poutre selon la revendication 1 ou 2, **caractérisée en ce que** lesdites parois (5) ont une seconde extension longitudinale maximale (5x) le long de ladite première direction (X) et **en ce que** ladite première plaque (6) est disposée entre lesdites au moins deux parois (5) complètement à l'intérieur de ladite seconde extension longitudinale maximale (5x) par rapport à ladite première direction (X).

4. Poutre selon l'une quelconque des revendications précédentes, **caractérisée en ce que** ladite première plaque (6) comprend une partie parallélépipédique (60) ;
ladite partie parallélépipédique (60) ayant une épaisseur (6z) le long d'une troisième direction (Z) et comprenant :
- une première face (6a), parallèle à un premier plan (A) ;
- une seconde face (6b), parallèle et opposée à ladite première face (6a) et espacée de ladite première face (6a) le long de ladite troisième direction (Z) par ladite épaisseur (6z) ;
- deux premières faces latérales (6d), parallèles à un deuxième plan (B) sur des premiers côtés opposés respectifs desdites première et seconde faces (6a, 6b) et opposées l'une à l'autre le long de ladite première direction (X) ; et
- deux secondes faces latérales (6c), parallèles à un troisième plan (C) sur des seconds côtés opposés respectifs desdites première et seconde faces (6a, 6b) et opposées l'une à l'autre le long de ladite deuxième direction (Y) ;
ladite première plaque (6) comprenant en outre deux saillies latérales (14), chacune faisant saillie à partir d'une face respective desdites secondes faces latérales (6c) le long de ladite deuxième direction (Y) ;
lesdites saillies latérales (14) étant allongées parallèlement à ladite première direction (X) ;
chacune desdites parois (5) comprenant au moins une fente (30), allongée parallèlement à ladite première direction (X), qui chevauche une saillie respective desdites deux saillies latérales (14) ;
ladite première plaque (6) étant soudée à chacune desdites parois (5) au moyen dudit premier cordon de soudure (65) au niveau des points de contact entre le contour de ladite fente (30) respective et ladite saillie latérale (14) respective ;
ladite troisième direction (Z) étant transversale auxdites première et deuxième directions (X, Y) ;
ledit premier plan (A) étant défini par lesdites première et deuxième directions (X, Y) ;
ledit deuxième plan (B) étant défini par lesdites deuxième et troisième directions (Y, Z) ;
ledit troisième plan (C) étant défini par lesdites première et troisième directions (X, Z).

5. Poutre selon la revendication 4, comprenant une seconde plaque (7) disposée entre lesdites deux parois (5) et comprenant, à son tour :
- une surface plane (7a), parallèle audit deuxième plan (B) ; et
- deux ailes latérales (7b) parallèles audit troisième plan (C) et faisant saillie de ladite surface plane (7a) sur des troisièmes côtés respectifs opposés de ladite surface plane (7a) le long de ladite première direction (X) ;
**caractérisée en ce que** lesdites première et seconde plaques (6, 7) sont soudées l'une à l'autre le long de ladite première direction (X) au niveau desdites deux ailes latérales (7b) au moyen de deuxièmes cordons de soudure (67) et/ou le long de ladite deuxième direction (Y) au niveau de ladite surface plane (7a) au moyen d'un troisième cordon de soudure (76).

6. Poutre selon la revendication 5, **caractérisée en ce que** chacune desdites deux ailes latérales (7b) comprend un évidement (16), allongé parallèlement à ladite première direction (X) ;
chacun desdits évidements (16) étant mis en prise par une saillie latérale (14) respective de ladite première plaque (6) ;
ladite première plaque (6) et ladite seconde plaque (7) étant soudées le long de ladite première direction (X) au niveau des points de contact entre chacune desdites saillies latérales (14) et le contour dudit évidement (16) respectif avec lesdits deuxièmes cordons de soudure (67).

7. Poutre selon la revendication 5 ou 6, **caractérisée en ce que** ladite première plaque (6) et ladite seconde plaque (7) sont symétriques par rapport à un plan de symétrie (J), qui est parallèle audit troisième plan (C) ;
l'une desdites premières faces latérales (6d) faisant face à ladite seconde plaque (7) ;
ladite première plaque (6) comprenant une saillie centrale (13) qui fait saillie le long de ladite première direction (X) à partir de ladite face desdites premières faces latérales (6d) faisant face à ladite seconde plaque (7) et allongée parallèlement à ladite deuxième direction (Y) ;
ladite surface plane (7a) étant pourvue d'une ouverture (15), allongée parallèlement à ladite deuxième direction (Y) et étant mise en prise par ladite saillie centrale (13) de ladite première plaque (6) ;
lesdites première et seconde plaques (6, 7) étant soudées au niveau des points de contact entre le contour de ladite ouverture (15) et ladite saillie centrale (13) le long de ladite deuxième direction (Y) avec ledit troisième cordon de soudure (76).

8. Poutre selon la revendication 6 ou 7, **caractérisée en ce que** chacune desdites saillies latérales (14) et ledit évidement (16) respectif sont soudés par trois desdits deuxièmes cordons de soudure (67) ;
deux desdits trois deuxièmes cordons de soudure (67) étant formés sur ladite première plaque (6) du côté de ladite première face (6a) et sur des quatrièmes côtés opposés respectifs de chacune desdites ailes latérales (7b) par rapport à ladite deuxième direction (Y) ;
l'un desdits trois deuxièmes cordons de soudure (67) étant formé sur ladite première plaque (6) du côté de ladite seconde face (6b) et du côté de chacune desdites ailes latérales (7b) faisant face à ladite paroi (5).

9. Poutre selon les revendications 5 à 8, **caractérisée en ce que** chacune desdites parois (5) comprend au moins une fente supplémentaire (31) s'étendant parallèlement à ladite première direction (X) ;
ladite aile latérale (7b) étant soudée au contour de ladite fente supplémentaire (31) au moyen d'un quatrième cordon de soudure (75) respectif.

10. Poutre selon la revendication 9, **caractérisée en ce que** chacune desdites parois (5) comprend au moins :
- un premier et un deuxième tronçon (5a, 5b), qui sont parallèles audit troisième plan (C) et sont disposés au niveau des extrémités verticales desdites parois (5) le long de ladite troisième direction (Z) ; et
- un troisième tronçon (5c), qui est parallèle auxdits premier et deuxième tronçons (5a, 5b) et interposé entre lesdits premier et deuxième tronçons (5a, 5b) ;
lesdits premier, deuxième et troisième tronçons (5a, 5b, 5c) étant les tronçons desdites parois (5) les plus proches desdites ailes latérales (7b) ;
chacune desdites parois (5) comprenant trois desdites fentes supplémentaires (31), chacune étant formée sur un premier, deuxième ou troisième tronçon (5a, 5b, 5c) respectif ;
ladite fente (30) étant interposée entre lesdits premier et troisième tronçons (5a, 5c) le long de ladite troisième direction (Z).

11. Machine à laver (1) destinée à laver des récipients (10), comprenant :
- une pluralité de poutres (2) selon l'une quelconque des revendications précédentes ;
- ledit convoyeur (3) pour transporter ladite pluralité de poutres (2) le long d'un chemin (W) à travers ladite machine (1) ; et
- une pluralité desdits ensembles de connexion (4) qui relient fonctionnellement les poutres (2) audit convoyeur (3).

12. Procédé de connexion d'une paroi (5) d'une poutre (2) à un ensemble de connexion (4) de ladite poutre (2) ; ledit ensemble de connexion (4) étant conçu pour connecter ladite poutre (2) à un convoyeur (3) d'une machine à laver (1) destinée à laver des récipients (10), comprenant les étapes consistant à :
i) associer une première plaque (6) et une seconde plaque (7) dudit ensemble de connexion (4) ;
ii) souder ladite première plaque (6) et ladite seconde plaque (7) l'une à l'autre ; et
iii) disposer lesdites première et seconde plaques (6, 7) entre deux desdites parois (5) de ladite poutre (2) ;
lesdites deux parois (5) étant allongées parallèlement à une première direction (X) et espacées l'une de l'autre le long d'une deuxième direction (Y), qui est transversale à ladite première direction (X) ;
ladite première plaque (6) ayant une première extension longitudinale (6x) le long de ladite première direction (X) ;
**caractérisé en ce qu'**il comprend en outre l'étape consistant à :
iv) souder ladite première plaque (6) à au moins une desdites deux parois (5), un premier cordon de soudure (65) s'étendant le long de ladite première direction (X) sur toute ladite première extension longitudinale (6x) de ladite première plaque (6).

13. Procédé selon la revendication 12, **caractérisé en ce qu'**il comprend en outre l'étape consistant à :
v) souder ladite première plaque (6) auxdites deux parois (5), lesdits premiers cordons de soudure (65) respectifs s'étendant le long de ladite première direction (X) tout au long de ladite première extension longitudinale (6x) de ladite première plaque (6).

14. Procédé selon la revendication 12 ou 13, **caractérisé en ce que** ladite étape iii) comprend la sous-étape consistant à :
vi) disposer ladite première plaque (6) entre lesdites deux parois (5) complètement à l'intérieur d'une seconde extension longitudinale maximale (5x) desdites deux parois (5) par rapport à ladite première direction (X) ;
ladite seconde extension longitudinale maximale (5x) étant mesurée le long de ladite première direction (X) .

15. Procédé selon les revendications 12 à 14, **caractérisé en ce que** ladite étape iv) comprend en outre les sous-étapes consistant à :
vii) superposer une fente (30) de chaque paroi (5) à l'une des deux saillies latérales (14) de ladite première plaque (6) ;
ladite première plaque (6) comprenant deux premières faces latérales (6c) parallèles à un premier plan (C) et opposées l'une à l'autre ;
ledit premier plan (C) étant défini par ladite première direction (X) et une troisième direction (Z), transversale auxdites première et deuxième directions (X, Y) ;
chacune desdites deux saillies latérales (14) faisant saillie de l'une respective desdites premières faces latérales (6c) le long de ladite deuxième direction (Y) ;
ladite fente (30) et ladite saillie latérale (14) étant allongées parallèlement à ladite première direction (X) ; et
viii) souder ladite première plaque (6) à chacune desdites parois (5) au niveau des points de contact entre le contour de ladite fente (30) et ladite saillie latérale (14) respective, au moyen desdits premiers cordons de soudure (65).

16. Procédé selon la revendication 15, **caractérisé en ce que** ladite étape i) comprend la sous-étape consistant à :
ix) placer lesdites saillies latérales (14) de ladite première plaque (6) dans les évidements (16) respectifs de ladite seconde plaque (7) ;
ladite seconde plaque (7) comprenant deux ailes latérales (7b), parallèles audit premier plan (C) ;
lesdits évidements (16) sont formés au niveau des ailes latérales (7b) de ladite seconde plaque (7) et étant allongés parallèlement à ladite première direction (X) ;
ladite étape i) comprenant en outre une sous-étape x) consistant à insérer une saillie centrale (13) de ladite première plaque (6) dans une ouverture (15) de ladite seconde plaque (7) ;
ladite première plaque (6) comprenant deux secondes faces latérales (6d) parallèles à un deuxième plan (B), opposées l'une à l'autre et perpendiculaires auxdites deux premières faces latérales (6c) ;
ledit deuxième plan (B) étant défini par lesdites deuxième et troisième directions (Y, Z) et transversal audit premier plan (C) ;
ladite saillie centrale (13) faisant saillie le long de ladite première direction (X) à partir de l'une desdites secondes faces latérales (6d) faisant face à ladite seconde plaque (7) ;
ladite ouverture (15) étant formée dans une surface plane (7a) de ladite seconde plaque (7) ;
ladite surface plane (7a) étant parallèle audit deuxième plan (B) ;
lesdites ailes latérales (7b) faisant saillie de ladite surface plane (7a) le long de ladite première direction (X) sur des premiers côtés opposés respectifs de ladite surface plane (7a) par rapport à ladite deuxième direction (Y) ;
ladite ouverture (15) et ladite saillie centrale (13) étant allongées parallèlement à ladite deuxième direction (Y).

17. Procédé selon la revendication 16, **caractérisé en ce que** ladite étape ii) comprend les sous-étapes consistant à :
xi) souder lesdites première et seconde plaques (6, 7) au niveau des points de contact entre lesdites saillies latérales (14) et le contour desdits évidements (16) le long de ladite première direction (X), de sorte à former un deuxième cordon de soudure (67) et/ou entre ladite saillie centrale (13) et ladite ouverture (15) le long de ladite deuxième direction (Y), de sorte à former un troisième cordon de soudure (76).

18. Procédé selon la revendication 16 ou 17, **caractérisé en ce qu'**il comprend en outre l'étape consistant à :
xii) souder lesdites ailes latérales (7b) à des fentes supplémentaires (31) desdites parois (5), de sorte à former des quatrièmes cordons de soudure (75) ;
lesdites fentes supplémentaires (31) s'étendant le long de ladite première direction (X).
